(19) Europäisches Patentamt / European Patent Office / Office européen des brevets

(11) **EP 2 053 419 B1**

(12) **EUROPEAN PATENT SPECIFICATION**

(45) Date of publication and mention
of the grant of the patent:
**17.10.2012 Bulletin 2012/42**

(51) Int Cl.:
***G01S 7/52*** *(2006.01)*

(21) Application number: **08018527.5**

(22) Date of filing: **23.10.2008**

(54) **Apparatus and method of estimating and compensating a motion in forming a synthetic image using a particular scan sequence**

Vorrichtung und Verfahren zur Schätzung und Kompensation einer Bewegung bei der Erzeugung eines synthetischen Bildes unter Benutzung einer besonderen Abtastreihenfolge

Appareil et procédé d'évaluation et de compensation d'un mouvement dans la formation d'une image synthétique en utilisant une séquence particulière de lignes explorées

(84) Designated Contracting States:
**DE FR IT**

(30) Priority: **25.10.2007 KR 20070107963
29.09.2008 KR 20080095126**

(43) Date of publication of application:
**29.04.2009 Bulletin 2009/18**

(73) Proprietor: **Samsung Medison Co., Ltd.
Hongcheon-gun, Gangwon-do (KR)**

(72) Inventors:
• **Bae, Moo Ho
Songpa-gu
Seoul 138-240 (KR)**
• **Ham, Jeong Ho
Gangnam-gu
Seoul 135-280 (KR)**

(74) Representative: **Schmid, Wolfgang
Lorenz & Kollegen
Patentanwälte Partnerschaftsgesellschaft
Alte Ulmer Strasse 2
89522 Heidenheim (DE)**

(56) References cited:
US-A- 5 438 994      US-A- 5 961 462
US-A1- 2004 102 702   US-B1- 6 352 508

• M-H BAE ET AL: "P2B-3 A New Motion Estimation and Compensation Method for Real-Time Ultrasonic Synthetic Aperture Imaging" ULTRASONICS SYMPOSIUM, 2007. IEEE, IEEE, PISCATAWAY, NJ, USA, 28 October 2007 (2007-10-28), pages 1511-1513, XP031195271 ISBN: 978-1-4244-1383-6
• TAVH B ET AL: "An efficient motion estimation technique for ultrasonic subaperture imaging" ENGINEERING IN MEDICINE AND BIOLOGY SOCIETY, 1998. PROCEEDINGS OF THE 20TH ANNUAL INTERNATIONAL CONFERENCE OF THE IEEE HONG KONG, CHINA 29 OCT.-1 NOV. 1998, PISCATAWAY, NJ, USA,IEEE, US, vol. 2, 29 October 1998 (1998-10-29), pages 816-819, XP010320558 ISBN: 978-0-7803-5164-6
• LOKKE GARNMELMARK K ET AL: "Duplex synthetic aperture imaging with tissue motion compensation" 2003 IEEE ULTRASONICS SYMPOSIUM PROCEEDINGS. HONOLULU, HAWAII, OCT. 5 20031005; 20031005 - 20031008 NEW YORK, NY : IEEE, US, vol. 2, 5 October 2003 (2003-10-05), pages 1569-1573, XP010702293 ISBN: 978-0-7803-7922-0
• JENSEN J A ET AL: "P3C-4 Motion Compensated Beamforming in Synthetic Aperture Vector Flow Imaging" ULTRASONICS SYMPOSIUM, 2006. IEEE, IEEE, PI, 1 October 2006 (2006-10-01), pages 2027-2031, XP031076694 ISBN: 978-1-4244-0201-4

**Description**

## BACKGROUND OF THE INVENTION

**[Technical Field]**

The present invention generally relates to an ultrasound synthetic image, and more particularly to an apparatus and method of estimating and compensating a motion in forming an ultrasound synthetic image for a moving object to thereby enhance resolution and improve a signal-to-noise ratio (SNR).

**[Background Art]**

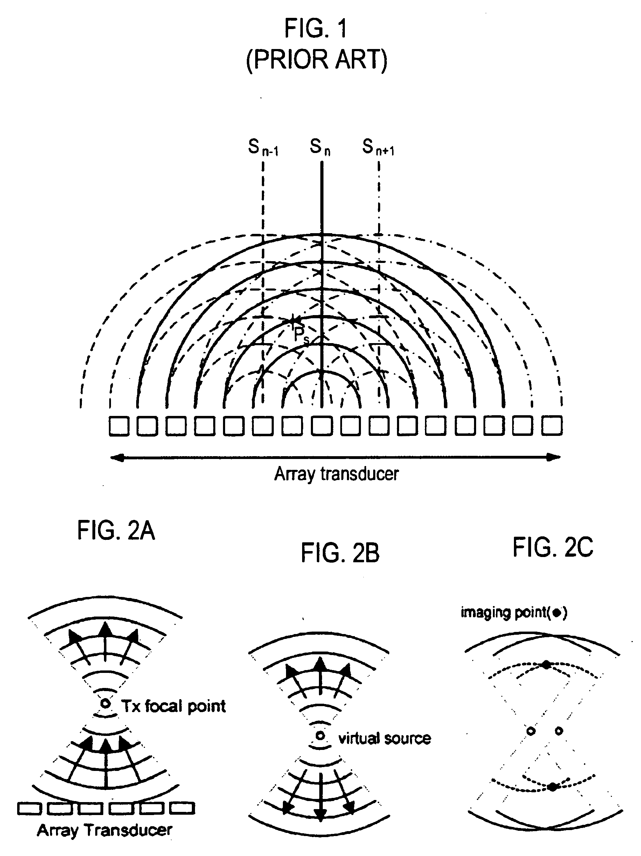

Generally, an ultrasound diagnostic system may use an array transducer for transmitting and receiving ultrasound signals. In order to obtain an enhanced ultrasound image, an ultrasound synthetic image may be adopted. The ultrasound synthetic image may be formed by using receive dynamic focusing for forming multi-receive beams in response to one time transmission of a transmit beam. The ultrasound diagnostic system may synthesize the receive beams corresponding to the same scan line obtained through a plurality of transmissions of the transmit beam along a plurality of scan lines to thereby form an ultrasound synthetic image. For example, assuming that the transmit beam is transmitted along a $n^{th}$ scan line ($S_n$), the ultrasound diagnostic system may form ($2m+1$) numbers of receive beams corresponding to scan lines $S_{n-m}$, $S_{n-(m-1)}$, ..., $S_n$, ..., $S_{n+(m-1)}$, $S_{n+m}$, wherein $m>0$. As shown in FIG. 1, when the transmit beam is focused along a scan line $S_n$, three receive beams may be formed based on echo signals from scan lines $S_{n-1}$, $S_n$ and $S_{n+1}$. That is, three receive beams may be obtained per each scan line and the receive beams are then synthesized to form an ultrasound synthetic image.

When a target object is a stationary object, an ultrasound synthetic having good resolution and signal to noise ratio may be obtained. However, when the target object is a moving object (especially moving in an axial direction), an undesirable image may be displayed in forming an ultrasound synthetic image. That is, the ultrasound synthetic image may be formed by using receive beams obtained with a time delay or multiple transmit beams such as bi-directional pixel based focusing. Thus, if a motion occurs in the target object and beam forming is carried out without considering the motion, then an incoherent sum may occur, which makes contrast resolution and SNR lowered.

Various pixel based researches or area based researches have been conducted in order to estimate and compensate a motion that occurred in the ultrasound synthetic image. There are proposed methods for estimating and compensating the motion by using cross correlation, auto correlation, sum of absolute difference, etc. There is a problem in that the pixel based motion estimation and compensation requires a large amount of calculation.

XP010324558 "An efficient motion estimation technique for ultrasonic subaperture imaging" describes a method and an apparatus for ultrasonic subaperture imaging which is based on multi-element synthetic aperture approach and permits low--cost imaging systems, but is susceptible to motion artefacts. The sub-aperture imaging is based on correlation processing using highly correlated reference signals collected from neighbouring subapertures exhibiting high signal redundancy. In the subaperture processing the last element of the first receive subaperture and the first element of the neighbouring receive subaperture are used as the reference signals to obtain highly correlated reference signals.

According to US 6,352,508 B1 an extended field of view medical diagnostic ultrasound image is corrected for distortion associated with azimuthal motion of the transducer. The actual azimuthal motion is determined from the original, motion-distorted estimate of transducer motion, and this actual transducer motion is then used to correct dimensional errors in the extended field of view image.

US 5,961,462 A shows the Doppler imaging of blood flow or slowly moving tissue at high frame rates of display being performed by oversampled acquisition of a Doppler ensemble from the body and display of Doppler information within a display range of Doppler values which is less than the range defined by said rate of oversampling.

According to XP010702293 "Duplex Synthetic Aperture Imaging with Tissue Motion Compensation" a method for tissue motion estimation and compensation in synthetic transmit aperture imaging is investigated.

In XP031076694 "Motion compensated beamforming in synthetic aperture vector flow imaging" the beamformed data from a number of emissions are summed in synthetic aperture imaging to create dynamic focussing in transmit making the method susceptible to motion.

## BRIEF DESCRIPTION OF THE DRAWINGS

FIG. 1 is a schematic diagram showing a procedure of forming a general synthetic image.

FIG. 2A shows a transmit fields in a brightness (B) mode with the array transducer.

FIG. 2B shows a virtual source element located at a focal depth in a B mode.

FIG. 2C shows superposition of transmit fields of two virtual source elements at imaging points.

FIG. 3 is a schematic block diagram illustrating an ultrasound diagnostic system in accordance with one embodiment of the present invention.

FIG. 4 is a schematic block diagram illustrating a beam former.

FIG. 5 is a schematic block diagrams illustrating an image motion estimation/compensation unit.

FIG. 6 is an exemplary diagram showing a non-sequential transmit order of a transmit beam for a plurality of scan lines in accordance with one embodiment of the present invention.

FIG. 7 is a schematic diagram showing an example of a synthetic aperture imaging method by using BiPBF.

FIG. 8 is a schematic diagram showing a method of obtaining a synthesis data at an arbitrary imaging point by using a plurality of low resolution images.

FIG. 9 is a graph showing lateral beam width for the maximum values on the scan lines.


## DETAILED DESCRIPTION OF THE INVENTION

The present invention is directed to removing an effect caused by side lobes with a relatively low amount of calculation in an ultrasound synthetic image to thereby enhance resolution and compensate a signal to noise ratio (SNR) for degradation. The present invention adjusts the transmit order of a transmit beam for scan lines, thereby removing factors having unnecessary phases caused by the side lobes. This is so that a radio frequency (RF) pixel (or sample unit) based motion estimation and compensation may be achieved with a relatively low amount of calculation. The present invention is simulated based on bidirectional pixel based focusing (BIPBF) and the proposed method may be applied to a general synthetic imaging method of ultrasound images.

Generally, the ultrasound synthetic image may be formed by using one of a receive synthetic-aperture focusing method or a transmit synthetic-aperture focusing method. The receive synthetic-aperture focusing method is a technique applied to a commercial equipment. Multi-receive beams may be formed and stored by repeatedly performing transmission and reception of ultrasound signals for the scan lines and then the stored receive beams are synthesized. This is so that an ultrasound synthetic image can be obtained according to the receive synthetic-aperture focusing method. The transmit synthetic-aperture focusing method may have an effect relatively increasing an ultrasound transmit power by using ultrasound signals generated in a plurality of transmit fields instead of a single transmit field.

The BiPBF method performs transmit and receive focusing for all points based on the transmit synthetic-aperture focusing method. As illustrated in FIG. 2B, the BiPBF method may be translated by referring to a transmit focal point as a virtual source element.

FIG. 2A shows a transmit field in a brightness (B) mode with the array transducer. As shown in FIG. 2A, the transmit field, which is radiated from the array transducer, converges toward a focal point and then diverges in the form of a circular wave within a limited angular extent. FIG. 2B shows a virtual source element located at a focal depth in the B mode. The virtual source element generates a circular wave back and forth with respect to itself. FIG. 2C shows a superposition of transmit fields of two virtual source elements at imaging points. As shown in FIG. 2C, one imaging point is shown before the focal depth and the other imaging point is shown after the focal depth with respect to a center of symmetry of the circular field.

The BiPBF method may be able to maintain a uniform lateral resolution over all focal depths and reduce a side lobe level compared to other methods. Also, since the transmit power increases due to the synthesis of transmit fields, an ultrasound synthetic image having an enhanced SNR may be obtained through the BiPBF method. However, the use of the BiPBF method is restricted to imaging a stationary or slowly moving object. If the BiPBF method is applied for imaging a fast moving object, then the resolution may be degraded or the target object may disappear in the ultrasound synthetic image. Especially, a motion occurring in an axial direction may largely affect the ultrasound synthetic image compared to a motion occurring in a lateral direction.

A motion occurring may be confidentially recognized by using 2-dimensional tissue Doppler imaging (2D-TDI). The 2D-TDI repeatedly transmits an ultrasound signal with an identical acoustic field at a constant time interval and detect a phase change of echo signals to thereby find a mean Doppler frequency by using auto correlation or other methods.

The synthetic aperture imaging (SAI) is similar to the 2D-TDI in terms of repeatedly transmitting an ultrasound signal. However, the SAI transmits an ultrasound sound signal in a different acoustic field per transmission, which is different from the 2D-TDI for transmitting the ultrasound signal with the identical acoustic field per transmission. In the SAI, a wave plane of the acoustic field may be rotated in a constant angle per each transmit in view of each of the pixels. This rotation causes the side lobes in a low resolution image formed based on each transmission to be also rotated.

Thus, in case of a main lobe of an independent target object, a motion in an axial direction may be found to be similar to a tissue Doppler. However, a wrong motion may be detected at a position of side lobes of the target object even at adjacencies of the target object, which is not moved. Thus, the present invention adopts a new transmit order of a transmit beam (i.e., a specified transmit order) for the scan lines and a phase detecting method through auto correlation for compensating for the wrongly detected motion.

Hereinafter, a problem caused by the side lobes in the low resolution image will be verified through the auto correlation for a stationary object and a moving object. A procedure using the new transmit order the transmit beam (i.e., not sequential but not non-sequential) and the auto correlation for calculating mean phase of receive beams to remove the effect caused by the side lobes and overcome limitation of amount of calculations will be described in detail. Since the motion is estimated and compensated in a pixel with a relatively low amount of calculation, a uniform resolution of an ultrasound synthetic image for the moving object may be maintained identical to that of the stationary object.

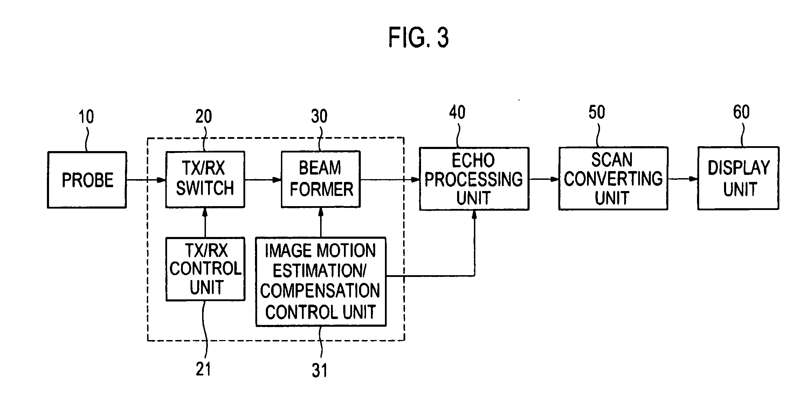

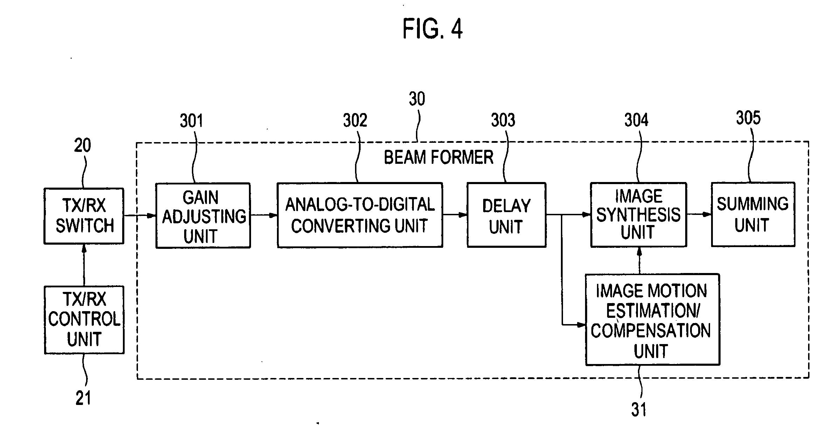

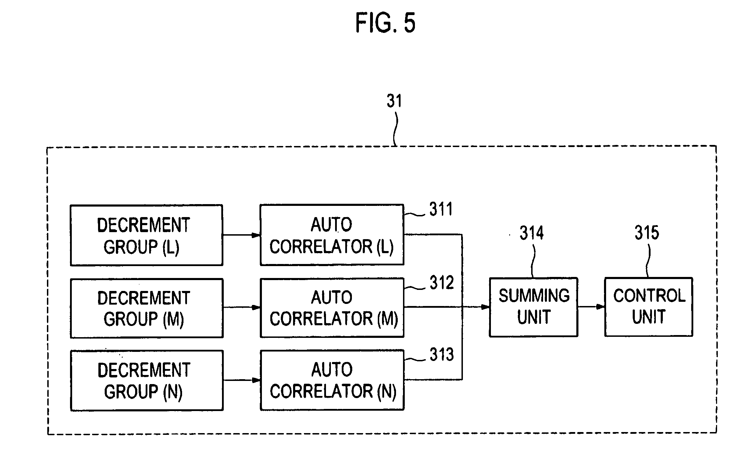

FIG. 3 is a schematic block diagram illustrating an ultrasound diagnostic system in accordance with one embodiment of the present invention. FIGS. 4 and 5 are schematic block diagrams illustrating a beam former and an image motion estimation/compensation unit.

A probe 10 includes an array transducer and is operable to transmit and receive ultrasound signals. The probe 10 may further include a transmitter (not shown) and an analog receiver (not shown). The array transducer comprises a plurality of elements (e.g., 128 elements) and is operable to output the ultrasound signals in response to transmit pulses applied from the transmitter. The analog receiver is operable to amplify electrical receive signal outputted from the array transducer in response to echo signals, remove aliasing phenomenon and noises, and compensate attenuation due to propagation of the ultrasound signals in the target object.

A transmit/receive switch 20 is operable to switch transmission and reception of the ultrasound signals for the same elements. The transmit/receive switch 20 is further operable to prevent a high power outputted from the transmitter from affecting the analog receiver. That is, when the transmission and the reception are alternately carried out, the transmit/receive switch 20 is operable to appropriately switch the transmitter and the analog receive.

A beam former 30 is operable to sample the electric receive signals outputted from the transducer elements in response to the echo signals and perform receive focusing upon the sampled electric receive signals. As shown in FIG. 4, the beam former 30 includes a gain adjusting unit 301, an analog-to-digital converting unit 302, a delay unit 303, an image synthesizing unit 304 and a summing unit 305. The gain adjusting unit 301 is operable to compensate gain of the analog receive signals received at the analog receiver. The analog-to-digital converting unit is operable to convert the analog receive signals to digital receive signals. The delay unit 303 is operable to apply a different amount of delay to the digital receive signals based on distance differences between the respective elements and a focal point. The image synthesizing unit 304 is operable to synthesize the delayed digital receive signals to thereby form a receive-focused beam of a radio frequency (RF). The summing unit 305 is operable to sum the receive-focused beams form at respective channels.

An echo processing unit 40 is operable to convert the RF receive-focused beam into a baseband signal and perform envelop detection with a quadrature demodulator, thereby obtaining an ultrasound image data corresponding to scan lines.

A scan converting unit 50 is operable to scan-convert the ultrasound image data in a format capable of being displayed on a display unit 60. That is, the scan converting unit 50 is operable to convert the ultrasound image data in an appropriate data format capable of being displayed on the display unit 60. The display unit 60 is operable to receive the scan-converted ultrasound image data to display an ultrasound image of the target object.

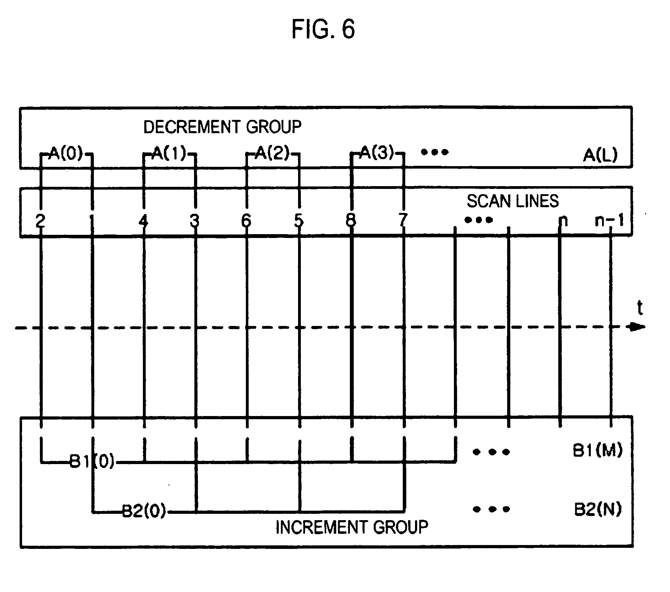

An ultimate aim of the present invention is to maintain uniform resolution of an ultrasound synthetic image for a moving object identical to that of a stationary object through motion estimation and compensation of the moving object in an ultrasound synthetic imaging procedure. As such, the present invention provides the non-sequential transmit order of the transmit beam for the scan lines and generates data necessary for motion estimation and compensation (e.g., phase data formed in a pixel unit or a sample unit) based on receive beams obtained in response to the transmit beam. The data is inputted into auto correlators 311-313 by grouping the receive beams based on the transmit order. That is, the present invention sets a specific transmit order of the transmit beam for the scan lines (*see* FIG. 6) through a transmit/receive control unit 21. The scan lines are grouped with a decrement group and an increment group. The detailed description for grouping of the scan lines will be provided later. As illustrated in FIG. 6, M and N numbers of receive beams responsive to the increment group and L numbers of receive beams responsive to the decrement group are obtained. The receive beams may be inputted to the auto correlators 311-313. The auto correlators 311-313 are operable to calculate phases from the inputted receive beams in a pixel unit or a sample unit and provide phase information for motion estimation and compensation based on the calculated phases. Thereafter, a control unit 315 of an image motion estimation/compensation control unit 31 is operable to calculate a velocity of the motion based on the phase information and compensate the motion by adjusting receive delay time based on the calculated velocity per each pixel. This is so that the resolution of an ultrasound synthetic image for a moving object is uniformly maintained identical to that of an ultrasound synthetic image for a stationary object. Although it is illustrated that the image motion estimation/compensation control unit 31 is installed in the beam former 30 in FIGS. 3 and 4, the image motion estimation/compensation control unit 31 may be installed at an outside of the beam former 30.

As mentioned above, the transmit/receive control unit 21 of the present invention does not set not the sequential transmit order for the scan lines but the non-sequential transmit order. Further, the auto correlators 311-313 of the image motion estimation/compensation control unit 31 detects phases at the respective pixels with auto correlation function from the receive beams responsive to the transmission of the transmit beams in the non-sequential transmit order for the scan lines. This is so that an effect due to the side lobes is removed with a relatively low amount of calculation. Thus, since the control unit 315 of the image motion estimation/compensation control unit 31 estimates and compensates the motion of a moving object in the ultrasound synthetic imaging process, the resolution of the image for the moving object is uniformly maintained identical to that of the ultrasound synthetic image for the stationary object. The present invention will be dominantly described for a control procedure for the image motion estimation and compensation (i.e., extraction of phases necessary for the motion estimation and compensation). The image motion estimation and compensation process (i.e., calculation of velocity of moving object based on the phase information and compensation for the motion based on the calculated velocity, e.g., compensation for focusing delay time based on the calculated velocities for the pixels) will be additionally described.

First, a phase status of a main lobe and a side lobe in an ultrasound synthetic image for a stationary object and an ultrasound synthetic image for a moving object will be checked through the low resolution images. Then, the phase status will be re-checked after setting a new transmit order of the transmit beams for the scan lines in accordance with the present invention.

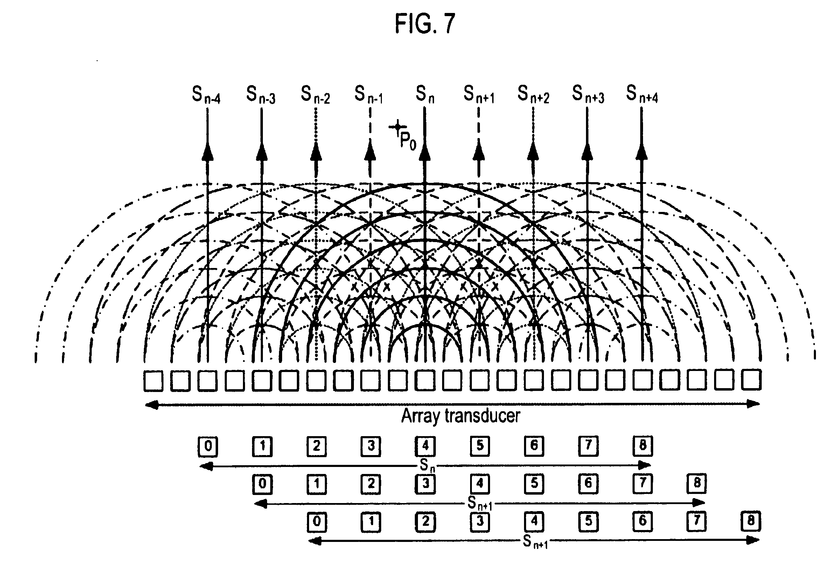

FIG. 7 is a schematic diagram showing an example of a synthetic aperture imaging method by using the BiPBF. As illustrated in FIG. 7, a plurality of scan lines (N=9) participate in forming the receive beams in response to one transmission of a transmit beam. Whenever the scan line for transmission is moved, the participated scan lines for forming the receive beams are also moved. The numbers 0-8 represent an index order for auto correlation and N (=9) is the number of the scan lines participating in forming receive beams in response to one transmission of a transmit beam. N is an ensemble number. The mean phase is calculated at each of the pixels by using the ensemble number of the receive beams at the auto correlation function.

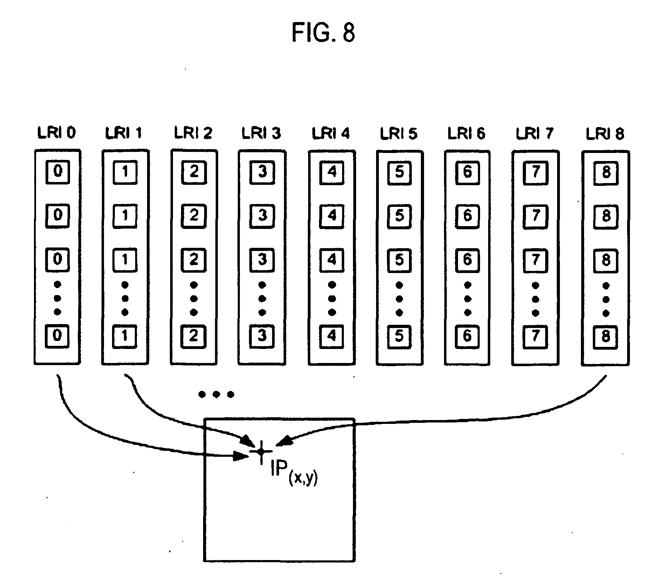

Since N=9, a low resolution image may be formed based on 9 receive beams obtained in response to one time of transmit focusing for an arbitrary scan line. Also, if the transmit focusing is shifted one by one to a next scan line, then 9 receive beams may be obtained for the corresponding transmit scan lines. Thus, when N=9, a phase change of an arbitrary pixel point P0 may be calculated from 9 low resolution images as shown in FIG. 8.

In the ultrasound synthetic image obtained by using the BiPBF for a stationary object, an image for a main lobe is indicated in the shape of a black hole as a correlation result since the phases for the main lobe are not changed. However, a phase may be changed due to the side lobe in spite of the stationary object. The phase change becomes lower close to the main lobe. Thus, the phase change due to the side lobe should be minimized.

Hereinafter, an auto correlation procedure for the receive beams obtained through the transmission of the specific transmit order of the transmit beam for the scan lines for a stationary object will described in detail.

When a moving velocity of the target object is calculated by using a phase change obtained through the auto correlation, the moving velocity should be 0 m/s in case of the stationary target object. However, a velocity component may be detected due to the effect of the side lobe in the ultrasound synthetic image. That is, if the transmit focusing is carried out in a sequential transmit order for the scan lines, then a phase for the main lobe is not changed, but a phase for the side lobe is rotated in a constant pattern in an x-y space. Thus, the present invention sets the transmit order of the transmit beam for the scan lines in a non-sequential manner to minimize the effect of the side lobes and then performs the auto correlation for the receive beams obtained in response to the newly set transmit order.

FIG. 6 is a schematic diagram showing an example of the specific transmit order of the transmit beam for the scan lines in accordance with the present invention. In order to set the transmit order, the scan lines are defined with sequential indices and the transmit order of the transmit beam for the scan lines is set in a non-sequential manner in which increment and decrement of the indices of the scan lines are repeated. As shown in FIG. 6, the transmit scan lines are divided into a scan line increment group and a scan line decrement group. Further, the increment and decrement are set as +2 and -1, respectively. The transmission for the scan lines is carried out in a rearranged transmit order such as 2, 1, 4, 3, 6, 5 ... instead of a sequential order such as 1, 2, 3, 4 ... , i.e., the transmit order is rearranged such that the decrement and increment of -1 and +2 are to be repeated. In such a case, assuming that a phase difference between receive beams obtained in response to the first transmission and the second transmission is indicated as a(1, 3), a mean phase difference calculated from a(2, 4), a(3, 5), a(8, 10), etc. (i.e., B group having a number difference of +2) for pixels located in the side lobe of the stationary target object may be denoted as B. Also, a mean phase difference calculated from a(2, 1), a(4, 3), a(6, 5), etc (i.e., A group having a number difference of -1) may be denoted as A. If the mean phase differences for the stationary target object are denoted as A and B, then the following equation (1) may be approximately obtained.

$$B = -2A \qquad\qquad (1)$$

$$A + \frac{1}{2} \times B = 0 \tag{2}$$

As shown in the equation (2), after A and B are individually calculated at each pixel, if weights are applied to A and B and then results are summed, then the wrong motion detection due to the rotation of the side lobe may be cancelled. Also, in case of the moving target object, even if a transmit order for the transmit scan lines is changed, the rotation of the phase due to the movement of the target object for each transmission may be defined as the following equation (3). Thus, if weights are applied and the applied results are summed, then a moving velocity of the target object may be accurately calculated such as the general 2D-TDI.

$$B = 2A \tag{3}$$

Thus, the unnecessary phase difference due to the rotation of the side lobe may be reduced and only a phase difference due to movement of the main lobe is observed. The mean phase is calculated by using the auto correlation. The auto correlation may be carried out as follows. Function $z_1(t)$ is defined by functions $z(t)$ and $z^*(t-T)$ as the following equation (4)

$$z_1(t) = z(t) \times z^*(t - T) \tag{4}$$

$$z^*(t - T) = x(t - T) - jy(t - T) \tag{5}$$

wherein $z^*(t-T)$ is a complex conjugate delayed by a delay time T from the function $z(t)$ as shown in the equation (5). If the function $z_1(t)$ is integrated over a specific time, then a result of the auto correlation function may be obtained as the following equation (6).

$$R(T,t) = \int_{-nT} z_1(t')dt' = R_x(T,t) + jR_y(T,t) \tag{6}$$

wherein n represents the number of the consecutive transmit pulses in a constant direction, which is referred to as an ensemble number in an ultrasound image.

The following equation (7) represents an auto correlation function for the receive beams corresponding to the increment group having the increment of +2. The following equations (8) and (9) represent the power and phase of the receive beams corresponding to the increment group. This process is carried out by an auto correlator 312 for the receive beams corresponding to the increment group among the auto correlators 311-313 of the image motion estimation/compensation control unit 31.

$$R_I(T_I,t) = \int_{-n_I T_I} z_{1I}(t')dt' = R_{xI}(T_I,t) + jR_{yI}(T_I,t) \tag{7}$$

$$\left|R_I(T_I,t)\right| = \sqrt{R_{xI}^2(T_I,t) + jR_{yI}^2(T_I,t)} \tag{8}$$

$$\Phi(T_I,t) = \tan^{-1}\frac{R_{yI}(T_I,t)}{R_{xI}(T_I,t)} \tag{9}$$

If a phase is calculated by applying a weight to the equation (9), then the following equation (10) may be obtained.

$$\Phi_S(T_I,t) = \frac{1}{2}\times\tan^{-1}\frac{R_{yI}(T_I,t)}{R_{xI}(T_I,t)} \tag{10}$$

The final results for the receive beams corresponding to the increment group may be expressed as the following equations (11) and (12).

$$R_{SxI}(T_I,t) = \left|R_I(T_I,t)\right|\times\cos(\Phi_S(T_I,t)) \tag{11}$$

$$R_{SyI}(T_I,t) = \left|R_I(T_I,t)\right|\times\sin(\Phi_S(T_I,t)) \tag{12}$$

The final results for the receive beams corresponding to the decrement group having the decrement of -1 may be expressed as the following equations (13) to (15).

$$R_D(T_D,t) = \int_{-n_D T_D} z_{ID}(t')dt' = R_{xD}(T_D,t) + jR_{yD}(T_D,t) \tag{13}$$

$$\left|R_D(T_D,t)\right| = \sqrt{R_{xD}^2(T_D,t) + jR_{yD}(T_D,t)} \tag{14}$$

$$\Phi(T_D,t) = \tan^{-1}\frac{R_{yD}(T_D,t)}{R_{xD}(T_D,t)} \tag{15}$$

A complex value summing the calculated phases of the receive beams for the increment group and the decrement group, which are obtained by the auto correlators 311-313 of the image motion estimation/compensation control unit 31, may be expressed as the following equations (16) and (17). The summation is carried out by the summation unit 314 of the image motion estimation/compensation control unit 31.

$$R_{Tx}(T,t) = R_{Sxl}(T_I,t) + R_{xD}(T_D,t) \tag{16}$$

$$R_{Ty}(T,t) = R_{Syl}(T_I,t) + R_{yD}(T_D,t) \tag{17}$$

The power of the corresponding pixel or sample may be defined as the following equation (18) and the phase may be defined as the following equation (19).

$$\left| R_T(T,t) \right| = \sqrt{R_{Tx}^2(T,t) + jR_{Ty}^2(T,t)} \tag{18}$$

$$\Phi_T(T,t) = \tan^{-1} \frac{R_{Ty}(T,t)}{R_{Tx}(T,t)} \tag{19}$$

The equation (19) represents a pixel based mean phase. By using this, a specific area based mean phase can be obtained. As such, the result of the equations (16) and (17) may be expressed in space coordinates as the following equation (20).

$$R_{Tx}(T,t) \rightarrow R_{Px}(s,z), \quad R_{Ty}(T,t) \rightarrow R_{Py}(s,z) \tag{20}$$

The equation (20) may be expressed as the following equations (21) and (22) so that it can be extended to a type having a specific area based mean phase.

$$R_{Rx}(i,j) = \frac{1}{k} \sum_{s=l}^{m} \sum_{z=n}^{0} R_{Px}(s,z) \tag{21}$$

$$R_{Ry}(i,j) = \frac{1}{k} \sum_{s=l}^{m} \sum_{z=n}^{0} R_{Py}(s,z) \tag{22}$$

In order to compensate the motion of the target object, the estimated phase should be transformed to a distance. A velocity of the target object may be calculated by using the following equation (23).

$$V_{t\arg et} = \Phi_T \times \frac{c}{2 \times f0} \times \frac{PRF}{2 \times \pi} \qquad (23)$$

wherein $V_{target}$ represents a velocity of the target object, c represents an acoustic velocity, f0 represents a center frequency of the transducer and PRF is a transmit repetition frequency. The distance may be calculated by using the calculated velocity of the target object as the following equation (24).

$$z_{mt\arg et} = V_{t\arg et} \times \frac{1}{PRF} \qquad (24)$$

The motion compensation is carried out by compensating the transmit focusing delay time and the receive focusing delay time based on the estimated velocity per each pixel, or additionally applying motion compensation focusing delay time without changing the transmit focusing delay time and the receive focusing delay time, which are set by not considering the motion. If a power threshold is appropriately adjusted in the auto correlation, then it is effective to reduce an effect of the side lobes.

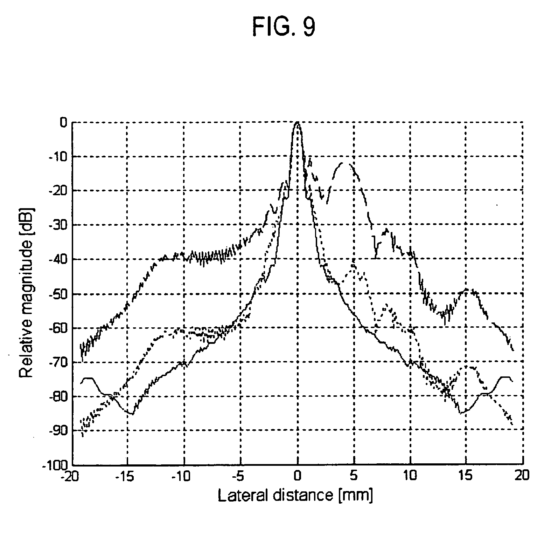

FIG. 9 is a graph showing lateral beam width for the maximum values on the scan lines. The solid line represents a case for a stationary object and the dashed line represents a case for a moving object without motion compensation. The dotted line represents a case for a moving object with motion compensation in accordance with one embodiment of the present invention. As shown in FIG. 9, the motion iscompensated in accordance with the present invention.

As mentioned above, the present invention sets a transmit order for the scan lines in a non-sequential manner, so that there is a merit reducing the effect due to the side lobes. Therefore, the motion in the moving object can be accurately estimated and compensated, so that a motion artifact, which may occur in forming an ultrasound synthetic image by using the BiPBF method, is reduced. Also, since the auto correlation can be carried out with a relatively low amount of calculation, the synthetic imaging process can be carried out in real time.

**Claims**

1. An apparatus for estimating and compensating a motion in forming an ultrasound synthetic image having a plurality of pixels, **characterized by** comprising:

   a transmit/receive control unit (21) configured to set a plurality of scan lines, define sequential indices upon the scan lines, and set a transmit order of transmit beams for the scan lines in a manner to alternate decrement and increment of a scan line index by -1 and +3, respectively, the transmit receive control unit (21) further being configured to transmit the transmit beam to a target object based on the set transmit order to obtain a plurality of receive beams in response to each transmission of the transmit beam;
   an auto correlation unit (311, 312, 313, 314) configured to group the receive beams to an increment group corresponding to a plurality of scan line pairs of the scan lines, each pair having an index difference of +2, and a decrement group corresponding to a plurality of scan line pairs of the scan lines, each pair having an index difference of -1, and perform auto correlation upon the receive beams included in the increment group and the decrement group to calculate a phase difference for all pairs of beams in each group and to calculate mean phase differences B and A for the increment and decrement group respectively,
   the auto correlation unit (311, 312, 313, 314) further being configured to apply weights to the auto correlation results A and B and sum the weight-applied auto correlation results to thereby provide phase information; and
   an image motion estimation and compensation unit *(315)* configured to estimate and compensate a motion of a target object based on the phase information.

2. The apparatus of Claim 1, wherein the auto correlation is carried out in a pixel unit.

3. The apparatus of Claim 1, wherein the receive beams are obtained by sampling echo signals in response to the transmission of the transmit beam

4. The apparatus of Claim 3, wherein the auto correlation is performed in a sampling unit.

5. The apparatus of Claim 1, wherein the image motion estimation and compensation unit (315) is further configured to calculate a velocity of the motion based on the phase information and estimate the motion based on the calculated velocity.

6. A method for estimating and compensating a motion in forming an ultrasound synthetic image having a plurality of pixels, comprising:

a) setting a plurality of scan lines and defining sequential indices upon the scan lines;
b) setting a transmit order of -transmit beams for the scan lines in a manner to alternate decrement and increment of a scan line index by -1 and +3, respectively;
c) transmitting the transmit beam to a target object based on the set transmit order to obtain a plurality of receive beams in response to each transmission of the transmit beam;
d) grouping the receive beams to an increment group corresponding to a plurality of scan line pairs of the scan lines, each pair having an index difference of +2, and a decrement group corresponding to a plurality of scan line pairs of the scan lines, each pair having an index difference of -1;
e) performing auto correlation upon the receive beams included in the increment group and the decrement group to calculate a phase difference for all pairs of beams in each group and to calculate mean phase differences B and A for the increment and decrement group respectively,
f) applying weights to the auto correlation results A and B and summing the weight-applied auto correlation results to thereby provide phase information; and
g) estimating and compensating a motion of a target object based on the phase information.

7. The method of Claim 6, wherein the auto correlation is carried out in a pixel unit

8. The method of Claim 6, wherein the receive beams are obtained by sampling echo signals in response to the transmission of the transmit beam

9. The method of Claim 6, wherein auto correlation is carried out in a sampling unit.

10. The method of Claim 6, wherein the g) includes calculating a velocity of the motion based on the summed result and estimating the motion based on the calculated velocity.

**Patentansprüche**

1. Vorrichtung zur Schätzung und Kompensation einer Bewegung bei der Erzeugung eines synthetischen Ultraschallbilds mit einer Vielzahl von Pixeln,
**gekennzeichnet durch**
eine Übertragungs-/Empfangs-Steuereinheit (21), welche dafür vorgesehen ist, eine Vielzahl von Scanlinien festzulegen, sequenzielle Anzeigen an den Scanlinien zu definieren und eine Übertragungsfolge von Übertragungsstrahlen für die Scanlinien auf eine Art und Weise festzulegen, um abwechselnd einen Scanlinienindex um -1 bzw. +3 zu verringern und zu erhöhen, wobei die Übertragungs-/Empfangs-Steuereinheit (21) des Weiteren dafür vorgesehen ist, den Übertragungsstrahl basierend auf der festgelegten Übertragungsfolge zu einem Zielobjekt zu übertragen, um eine Vielzahl von Empfangsstrahlen als Ergebnis für jede Übertragung des Übertragungsstrahls zu erhalten;
eine Autokorrelationseinheit (311,312,313,314), welche dafür vorgesehen ist, die Empfangsstrahlen zu einer einer Vielzahl von Scanlinienpaaren der Scanlinien entsprechenden Erhöhungsgruppe, wobei jedes Paar einen Indexunterschied von +2 aufweist, und einer einer Vielzahl von Scanlinienpaaren der Scanlinien entsprechenden Verringerungsgruppe zu gruppieren, wobei jedes Paar einen Indexunterschied von -1 aufweist, und eine Autokorrelation an den in der Erhöhungsgruppe und der Verringerungsgruppe enthaltenen Empfangsstrahlen durchzuführen, um einen Phasenunterschied für alle Paare von Strahlen in jeder Gruppe zu berechnen und um mittlere Phasenverschiebungen B und A für die Erhöhungs- bzw. Verringerungsgruppe zu berechnen;
wobei die Autokorrelationseinheit (311,312,313,314) des Weiteren dafür vorgesehen ist, Gewichtungen an den Autokorrelationsergebnissen A und B vorzunehmen und die gewichteten Autokorrelationsergebnisse zu summieren, um auf diese Weise Phaseninformationen zu erzeugen; und

eine Bildbewegungs-, Schätzungs- und Kompensations-Einheit (315), welche dafür vorgesehen ist, eine Bewegung eines Zielobjekts basierend auf den Phaseninformationen zu schätzen und zu kompensieren.

2. Vorrichtung nach Anspruch 1, wobei die Autokorrelation in einer Pixeleinheit durchgeführt wird.

3. Vorrichtung nach Anspruch 1, wobei die Empfangsstrahlen durch Abtasten von Echosignalen als Reaktion auf die Übertragung des Übertragungsstrahls erhalten werden.

4. Vorrichtung nach Anspruch 3, wobei die Autokorrelation in einer Abtasteinheit durchgeführt wird.

5. Vorrichtung nach Anspruch 1, wobei die Bildbewegungs-, Schätz- und Kompensationseinheit (315) des Weiteren dafür vorgesehen ist, eine Geschwindigkeit der Bewegung basierend auf den Phaseninformationen zu berechnen und die Bewegung basierend auf der berechneten Geschwindigkeit zu schätzen.

6. Verfahren zur Schätzung und Kompensation einer Bewegung bei der Erzeugung eines synthetischen Ultraschallbilds mit einer Vielzahl von Pixeln, welches Folgendes aufweist:

   a) Festlegen einer Vielzahl von Scanlinien und Definieren sequenzieller Anzeigen auf den Scanlinien;
   b) Festlegen einer Übertragungsfolge von Übertragungsstrahlen für die Scanlinien auf eine Art und Weise, um abwechselnd einen Scanlinienindex um -1 bzw. +3 zu verringern und zu erhöhen;
   c) Übertragen des Übertragungsstrahls zu einem Zielobjekt basierend auf der festgelegten Übertragungsfolge, um eine Vielzahl von Empfangsstrahlen als Reaktion auf jede Übertragung des Übertragungsstrahls zu erhalten;
   d) Gruppieren der Empfangsstrahlen zu einer einer Vielzahl von Scanlinienpaaren der Scanlinien entsprechenden Erhöhungsgruppe, wobei jedes Paar einen Indexunterschied von +2 aufweist, und einer einer Vielzahl von Scanlinienpaaren der Scanlinien entsprechenden Verringerungsgruppe, wobei jedes Paar einen Indexunterschied von -1 aufweist;
   e) Durchführen einer Autokorrelation an den in der Erhöhungsgruppe und der Verringerungsgruppe enthaltenen Empfangsstrahlen, um einen Phasenunterschied für alle Paare von Strahlen in jeder Gruppe zu berechnen und um mittlere Phasenverschiebungen B und A für die Erhöhungs- bzw. Verringerungsgruppe zu berechnen;
   f) Vornehmen von Gewichtungen an den Autokorrelationsergebnissen A und B und Summieren der gewichteten Autokorrelationsergebnisse, um auf diese Weise Phaseninformationen zu erzeugen; und
   g) Schätzen und Kompensieren einer Bewegung eines Zielobjekts basierend auf den Phaseninformationen.

7. Verfahren nach Anspruch 6, wobei die Autokorrelation in einer Pixeleinheit durchgeführt wird.

8. Verfahren nach Anspruch 6, wobei die Empfangsstrahlen durch Abtasten von Echosignalen als Reaktion auf die Übertragung des Übertragungsstrahls erhalten werden.

9. Verfahren nach Anspruch 6, wobei die Autokorrelation in einer Abtasteinheit durchgeführt wird.

10. Verfahren nach Anspruch 6, wobei g) das Berechnen einer Geschwindigkeit der Bewegung basierend auf dem summierten Ergebnis und Schätzen der Bewegung basierend auf der berechneten Geschwindigkeit beinhaltet.

**Revendications**

1. Appareil d'évaluation et de compensation d'un mouvement dans la formation d'une image ultrasonique synthétique ayant un grand nombre de pixels, **caractérisé en ce qu'**il comporte :

   une unité de commande transmission/réception (21) agencée pour réaliser un grand nombre de lignes de balayage, pour définir des indices séquentiels pour ces lignes de balayage, et établir un ordre de transmission de rayons transmetteurs correspondant pour les lignes de balayage de manière à alterner la décrémentation et l'incrémentation d'un indice de ligne de balayage de -1 et +3 respectivement ; l'unité de commande transmission/réception (21) étant en outre agencée pour transmettre un rayon vers un objet cible, basé sur le jeu d'ordres de transmission, pour obtenir une pluralité de rayons récepteurs en réponse à chaque transmission d'un rayon;

une unité d'auto-corrélation (311, 312, 313, 314) agencée pour grouper les rayons récepteurs vers un groupe incrémenté correspondant à une pluralité de paires de lignes de balayage, chaque paire ayant une différence d'indice de +2 et un groupe décrémenté correspondant à une pluralité de paires de lignes de balayage, chaque paire ayant une différence d'indice de -1, et pour effectuer une auto-corrélation après la réception des rayons, impliquant, dans le groupe incrémenté et dans le groupe décrémenté de calculer une différence de phase pour toutes les paires de rayons dans chacun des groupes et de calculer des différences de phases moyennes B et A respectivement entre les groupes incrémenté et décrémenté,

l'unité d'auto-corrélation (311, 312, 313, 314) étant en outre agencée pour appliquer des poids aux résultats des corrélations A et B et pour additionner les résultats des poids auto-corrélés pour fournir ainsi des informations de phases; et

une unité d'estimation d'image du mouvement et de compensation (315) agencée pour estimer et compenser un mouvement d'un objet cible basés sur l'information de phase.

2. Appareil selon la revendication 1, dans lequel l'auto-corrélation est effectuée en unité pixel.

3. Appareil selon la revendication 1, dans lequel les rayons récepteurs sont obtenus par la collecte des signaux d'écho en réponse à la transmission des rayons de transmission.

4. Appareil selon la revendication 3, dans lequel l'auto-corrélation est effectuée en unité de collecte.

5. Appareil selon la revendication 1, dans lequel l'unité d'estimation d'image du mouvement et de compensation (315) est en outre agencée pour calculer une vitesse du mouvement basée sur l'information relative à la phase et d'estimer le mouvement basé sur la vitesse calculée.

6. Procédé d'évaluation et de compensation d'un mouvement dans la formation d'une image ultrasonique synthétique ayant un grand nombre de pixels, comprenant :

   a) la fixation d'un grand nombre de lignes de balayage et la définition d'indices séquentiels pour ces lignes de balayage,
   b) la détermination des indices séquentiels relatifs à ces lignes de balayage de manière à alterner la décrémentation et l'incrémentation de l'indice de ligne de balayage de -1 et +3 respectivement;
   c) la transmission d'un rayon de transmission sur un objet cible basé sur l'ordre de transmission fixé pour obtenir une pluralité de rayons récepteurs en réponse à chaque transmission d'un rayon transmetteur ;
   d) le groupage des rayons récepteurs dans un groupe incrémenté correspondant à une pluralité de paires de lignes de balayage, chaque paire ayant une différence d'indice de +2 et un groupe décrémenté correspondant à une pluralité de paires de lignes de balayage, chaque paire ayant une différence d'indice de -1 ;
   e) l'auto-corrélation des rayons récepteurs contenus dans le groupe incrémenté le groupe décrémenté afin de calculer une différence de phase pour toutes les paires de rayons de chaque groupe de rayons et pour calculer une différence de phase moyenne B et A respectivement pour le groupe incrémenté et le groupe décrémenté,
   f) l'application de poids aux résultats auto-corrélés A et B et l' addition des résultats des poids auto-corrélés pour fournir des informations de phases; et
   g) l'estimation et la compensation du mouvement d'un objet cible basés sur l'information de phase.

7. Procédé selon la revendication 6, dans lequel l'auto-corrélation est effectuée en unité pixel.

8. Procédé selon la revendication 6, dans lequel les rayons récepteurs sont obtenus par la collecte des signaux d'écho en réponse à la transmission des rayons de transmission.

9. Procédé selon la revendication 6, dans lequel l'auto-corrélation est effectuée en unité de collecte.

10. Procédé selon la revendication 6, dans lequel g) comprend le calcul d'une vitesse du mouvement basée sur le résultat de l'addition et estimant le mouvement basé sur la vitesse calculée.

# FIG. 1
# (PRIOR ART)

Array transducer

## FIG. 2A

Array Transducer

## FIG. 2B

## FIG. 2C

## FIG. 3

EP 2 053 419 B1

FIG. 4

FIG. 5

EP 2 053 419 B1

## FIG. 6

FIG. 7

EP 2 053 419 B1

## FIG. 8

LRI 0   LRI 1   LRI 2   LRI 3   LRI 4   LRI 5   LRI 6   LRI 7   LRI 8

$$IP_{(x,y)}$$

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6352508 B1
- US 5961462 A